# EUROPÄISCHE PATENTSCHRIFT

(11) **EP 0 678 796 B1**
(45) Veröffentlichungstag und Bekanntmachung des Hinweises auf die Patenterteilung: **24.06.1998**
(21) Anmeldenummer: 94105722.6
(22) Anmeldetag: 13.04.1994
(51) Int. Cl.: G05B 19/05

(54) **Kompakte speicherprogrammierbare Steuerung und Zentraleinheit einer modularen speicherprogrammierbaren Steuerung**
Compact programmable logic controller and central unit of a modular programmable logic controller
Automate programmable compact et unité centrale d'un automate programmable modulaire

(43) Veröffentlichungstag der Anmeldung: 25.10.1995
(73) Patentinhaber: SIEMENS AKTIENGESELLSCHAFT, 80333 München (DE)
(72) Erfinder: Birzer, Johannes, Dipl.-Ing., D-92548 Schwarzach (DE)

(56) Entgegenhaltungen:
- EP-A- 0 540 903
- WO-A-91/14988
- DE-A- 3 808 135
- DE-A- 4 135 749
- DE-U- 9 112 306
- US-A- 5 245 704
- ELEKTRIE, Bd.44, Nr.7, 1990, Berlin, DD, SS 244-249, XP000162759; H. MÖHLENBEIN: 'INTERBUS - DEZENTRALE ECHTZEIT - PERIPHERIE FÜR STANDARD-SPS-SYSTEME'
- PATENT ABSTRACTS OF JAPAN vol. 18, no. 218 (P-1539) 19. April 1994 & JP-A-06 014 378

## Beschreibung

Die vorliegende Erfindung betrifft eine Zentraleinheit einer modularen speicherprogrammierbaren Steuerung nach dem Oberbegriff von Anspruch 1.

Bei einer Zentraleinheit einer modularen speicherprogrammierbaren Steuerung ist die Programmierschnittstelle als Punktzu-Punkt-Schnittstelle ausgebildet, so daß eine Programmiereinheit, z.B. ein Programmiergerat oder ein PC, über ein Schnittstellenkabel an die Zentraleinheit anschließbar ist. Um die Zentraleinheiten mehrerer derartiger Steuerungen miteinander zu vernetzen, weisen modulare speicherprogrammierbare Steuerungen eigene Kommunikationsbaugruppen mit zwei Schnittstellen auf. Die eine Schnittstelle ist über ein Verbindungskabel mit der Programmierschnittstelle der Zentraleinheit verbindbar. Die andere Schnittstelle ist eine busfähige Schnittstelle, so daß die Kommunikationsbaugruppe an einen Bus anschließbar ist, z.B. an den SINEC H1 oder an den SINEC L2.

Diese Konfiguration weist eine Vielzahl von Nachteilen auf. Zunächst wird Platz für die Kommunikationsbaugruppe benötigt. Ferner ist die Kommunikationsbaugruppe oftmals teurer als die Zentraleinheit selbst. Ferner ist die Kommunikation zwischen der Kommunikationsbaugruppe und der Zentraleinheit störanfällig und langsam. Über den Bus sind beispielsweise Übertragungsraten bis 1,5 MBaud (SINEC L2) bzw. bis zu 10 MBaud (SINEC H1) realisierbar, während die Übertragungsrate über das Verbindungskabel lediglich 9,6 kBaud beträgt.

Aus der EP-A-0 540 903 ist ein Steuerungsbaustein mit einer Netzwerkschnittstelle bekannt. Über diese Schnittstelle kann unter anderem auch das Anwenderprogramm in den Steuerungsbaustein geladen werden.

Aus der WO-A-91 14988 ist eine speicherprogrammierbare Steuerung mit einer busfähigen Schnittstelle bekannt. Diese Schnittstelle wird aber nicht als Programmierschnittstelle verwendet.

Die Aufgabe der vorliegenden Erfindung besteht darin, eine Möglichkeit zu schaffen, um von außen über die Programmierschnittstelle direkt auf die Peripherieeinheit zugreifen zu können bzw. umgekehrt von der Peripherieeinheit über die Programmierschnittstelle direkt auf andere, mit der speicherprogrammierbaren Steuerung verbundene Einheiten zugreifen zu können.

Die Aufgabe wird dadurch gelöst, daß die Zentraleinheit mit der mindestens einen Peripherieeinheit zusätzlich über eine Kommunikationsschnittstelle verbindbar ist und die Programmierschnittstelle mit der Kommunikationsschnittstelle verbunden ist.

Wenn die Programmierschnittstelle mit der Kommunikations-schnittstelle trennbar verbunden ist, sind die Kommunikation über den an die Programmierschnittstelle angeschlossenen Bus und einen an die Kommunikationsschnittstelle angeschlossenen Bus unabhängig voneinander betreibbar.

Die Prozessoreinheit kann mit der Programmierschnittstelle direkt oder über eine intelligente Zwischeneinheit verbunden sein. Bei Verbindung über eine intelligente Zwischeneinheit wird die Prozessoreinheit von der Verwaltung der Programmierschnittstelle entlastet. Die intelligente Zwischeneinheit kann wahlweise als softwaregesteuerter Mikroprozessor oder als in Hardware realisierter Mikrocontroller ausgebildet sein. Wenn die Prozessoreinheit mit der Programmierschnittstelle direkt oder über einen Mikroprozessor verbunden ist, sind Übertragungsraten bis knapp 200 kBaud realisierbar. Wenn die intelligente Zwischeneinheit als Mikrocontroller ausgebildet ist, sind Übertragungsraten bis zu 12 MBaud realisierbar.

Wenn die Programmierschnittstelle als serielle Schnittstelle mit Differenzsignalübertragung, z. B. als RS 485-Schnittstelle ausgebildet ist, ist die Signalübertragung besonders störungssicher.

Weitere Vorteile und Einzelheiten ergeben sich aus der nachfolgenden Beschreibung eines Ausführungsbeispiels in Verbindung mit den Zeichnungen. Dabei zeigen:
- FIG 1: mehrere miteinander vernetzte speicherprogrammierbare Steuerungen,
- FIG 2: den Aufbau einer kompakten speicherprogrammierbaren Steuerung und
- FIG 3 und 4: den Aufbau der Zentraleinheit einer modularen speicherprogrammierbaren Steuerung.

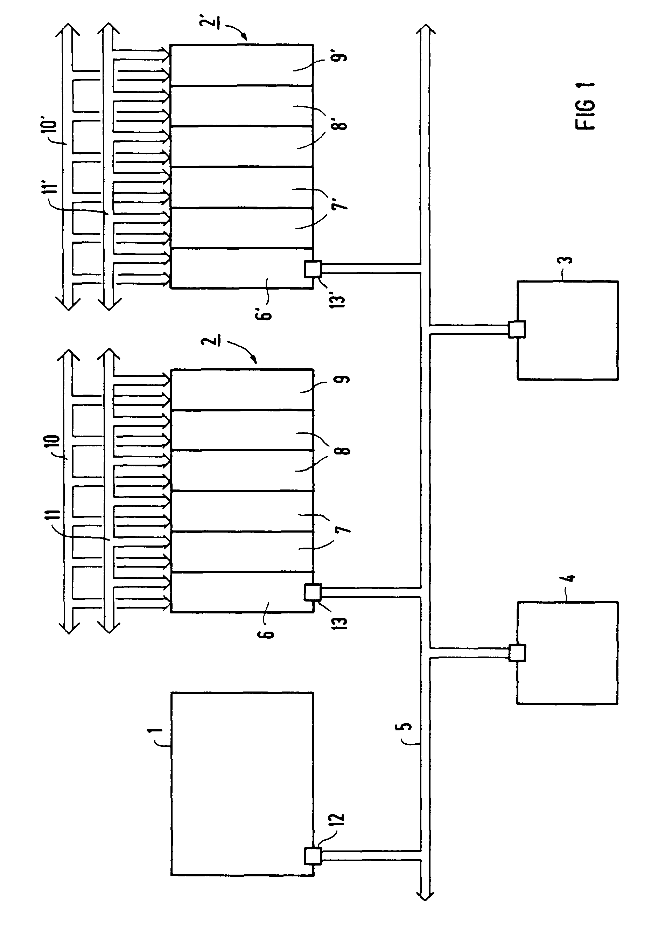

Gemäß FIG 1 sind eine kompakte speicherprogrammierbare Steuerung 1 (im folgenden Kompaktgerät genannt), modulare speicherprogrammierbare Steuerungen 2,2', eine Programmiereinheit 3 sowie eine Bedien- und Beobachtungseinheit 4 über einen Bus 5 miteinander vernetzt. Die speicherprogrammierbaren Steuerungen 1,2,2' sind dabei über die Programmierschnittstellen 12,13,13' an den Bus 5 angeschlossen.

An den Bus 5 können bis zu 15 Busteilnehmer 1-4,2' angeschlossen sein. Die Unterscheidung der Busteilnehmer 1-4,2' erfolgt über Adreßvergabe.

Die modularen speicherprogrammierbaren Steuerungen 2,2' weisen je eine Zentraleinheit 6,6', Eingabebaugruppen 7,7', Ausgabebaugruppen 8,8' sowie intelligente Peripherieeinheiten 9,9' auf. Die Einheiten 6 bis 9 bzw.6' bis 9' sind über die Busse 10,11 bzw. die Busse 10',11' miteinander verbunden. Die Busse 10,10' sind der Bewältigung von Echtzeitkommunikationen dienende Steuerungsbusse, die Busse 11,11' dienen der Übertragung Zeitunkritischer Kommunikation. Die Verbindung der Baugruppen 7-9, 7'-9' mit den Bussen 11, 11' ist dabei optional.

Das Kompaktgerät 1 kann beispielsweise eine SIMATIC S5-95U sein, die modularen speicherprogrammierbaren Steuerungen, beispielsweise SIMATIC S5-115U. Die Programmiereinheit 3 ist vorzugsweise als Programmiergerät oder als PC ausgebildet. Der Bus 5 ist vorzugsweise ein serieller Bus, auf dem Differenzsignale übertragen werden, z. B. ein SINEC L2.

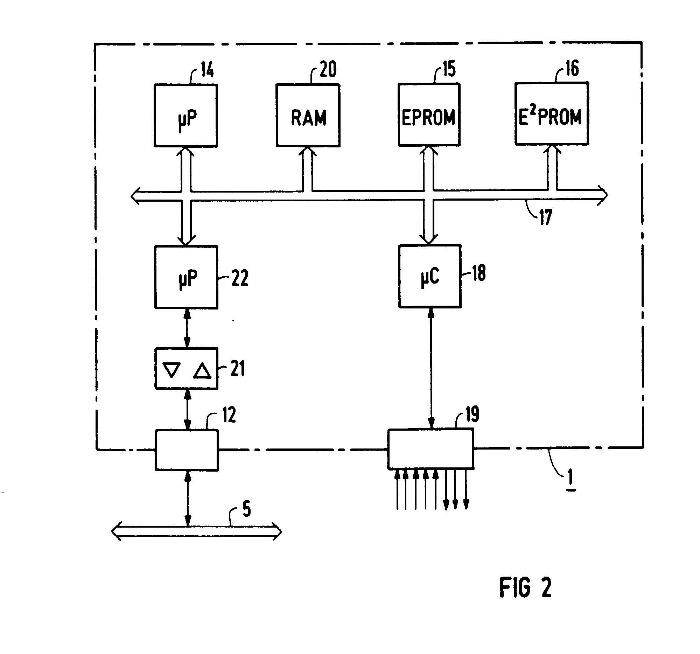

Gemäß FIG 2 weist das Kompaktgerät 1 eine Prozessoreinheit 14, z.B. einen Mikroprozessor 14, auf, der mit Hilfe des im Speicher 15 abgespeicherten Betriebssystems ein Anwenderprogramm abarbeitet, das im Speicher 16 abgespeichert ist. Hierzu greift der Prozessor 14 über den Bus 17 und den Mikrocontroller 18 auf die Prozeßschnittstelle 19 zu, an die nicht dargestellte Prozeßsensorelemente, z.B. Temperaturfühler, angeschlossen sind. Von dort liest sie Eingangssignale ein und speichert sie im Speicher 20 ab. Sodann ermittelt die Prozessoreinheit 14 aus diesen Eingangssignalen Ausgangssignale, hinterlegt sie ebenfalls im Speicher 20 und gibt sie sodann über den Bus 17, den Controller 18, die Prozeßschnittstelle 19 und an die Prozeßschnittstelle angeschlossene, ebenfalls nicht dargestellte Prozeßstellglieder, z.B. Heizelemente, an den zu steuernden technischen Prozeß aus. Der zu steuernde technische Prozeß kann dabei beliebiger Art sein, z.B. eine Brenner- oder eine Pressensteuerung.

Die Speicher 15,16,20 können auf mehrere Arten ausgebildet sein. In der Regel jedoch ist der Speicher 15 ein EPROM oder ein EEPROM, der Speicher 16 ein EEPROM oder ein Flash-EEPROM, der Speicher 20 ein gepuffertes oder ungepuffertes RAM.

Um das Anwenderprogramm in den Speicher 16 einschreiben zu können, weist das Kompaktgerät 1 eine Programmierschnittstelle 12 auf, die über Treiberbausteine 21 und eine intelligente Zwischeneinheit 22 mit dem Bus 17 verbunden ist. Die Treiberbausteine 21 sind im vorliegenden Fall Differenzverstärker, so daß die Programmierschnittstelle 12 als RS 485-Schnittstelle ausgebildet ist. Die intelligente Zwischeneinheit 22 ist im vorliegenden Fall als Mikroprozessor ausgebildet, der über ein intern abgespeichertes Programm gesteuert wird. Mittels dieses Mikroprozessors 22 sind über die Programnierschnittstelle 12 Übertragungsraten bis 187,5 kBaud realisierbar. Die intelligente Zwischeneinheit 22 könnte aber auch als Mikrocontroller ausgebildet sein oder entfallen. Im letzteren Fall wären die Treiberbausteine 21 direkt mit der Prozessoreinheit 14 verbunden.

Aufgrund der Ausbildung als RS 485-Schnittstelle ist die Programmierschnittstelle 12 nicht nur sehr störungssicher, sondern auch busfähig. An die Programmierschnittstelle 12 können also gleichzeitig mehrere andere Busteilnehmer angeschlossen werden. Um das Kompaktgerät 1 mit anderen speicherprogrammierbaren Steuerungen zu vernetzen, ist also keine weitere Schnittstelle nötig.

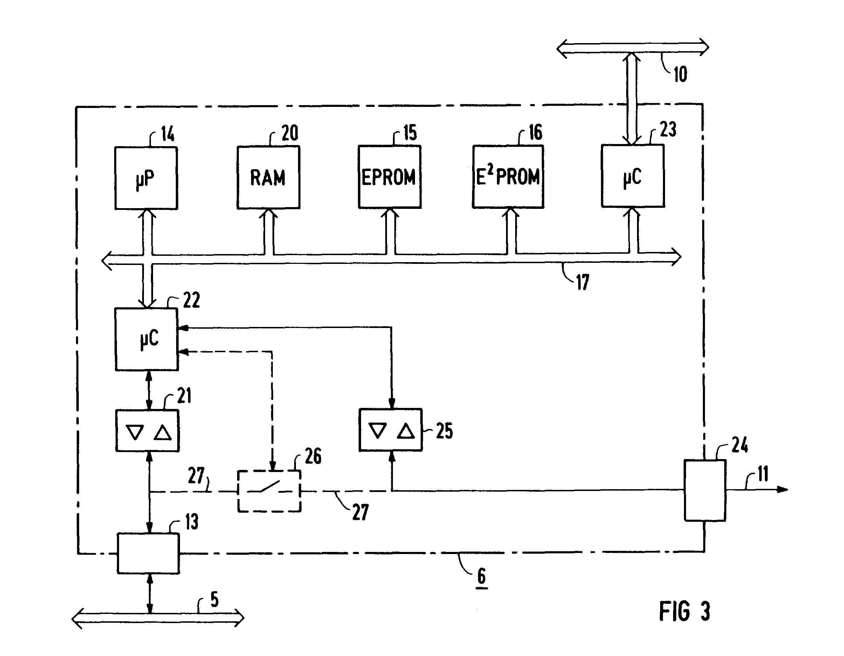

Die in FIG 3 dargestellte Zentraleinheit 6 der speicherprogrammierbaren Steuerung 2 ist - ebenso wie die Zentraleinheit 6' - im wesentlichen ähnlich aufgebaut wie das Kompaktgerät 1. Auch die Funktionsweise ist im wesentlich gleich. Soweit in FIG 3 die gleichen Bezugszeichen wie in FIG 2 verwendet werden, bezeichnen sie daher auch gleiche Elemente. Auch wird im folgenden nur auf die Unterschiede zum Kompaktgerät 1 eingegangen.

Da die speicherprogrammierbare Steuerung 2 modular aufgebaut ist, weist die Zentraleinheit 6 selbstverständlich keine eigene Prozeßschnittstelle auf. Diese sind in den Peripherieeinheiten 7 bis 9 vorhanden. Der Zugriff auf die Peripherieeinheiten erfolgt über den als Peripherieschnittstelle wirkenden Mikrocontroller 23 im Zusammenwirken mit dem Peripheriebus 10.

Die intelligente Zwischeneinheit 22 ist im vorliegenden Fall als applikationsspezifischer Mikrocontroller 22 (ASIC) ausgebildet. Die Steuerung der intelligenten Zwischeneinheit 22 erfolgt daher über Hardware. Folglich sind mit dieser Zwischeneinheit 22 hohe Übertragungsraten bis zu 12 MBaud realisierbar.

Zusätzlich zum Mikrocontroller 23 weist die Zentraleinheit 6 eine Kommunikationsschnittstelle 24 auf, an die der Kommunikationsbus 11 anschließbar ist. Dieser Bus 11 wird ebenfalls über die Treiberbausteine 25 als RS 485-Bus betrieben. Die Treiberbausteine 25 sind wieder mit der intelligenten Zwischeneinheit 22 verbunden.

Da sowohl über den Bus 5 als auch über den Bus 11 Differenzsignale gemäß der RS 485-Schnittstellendefinition übertragen werden, ist es möglich, die beiden Busse 5,11 miteinander zu koppeln. Vorzugsweise geschieht dies über die in FIG 3 gestrichelt eingezeichneten Schalter 26 und die Verbindungsleitungen 27. Die Schalter 26 werden ebenfalls von der intelligenten Zwischeneinheit 22 gesteuert. Die Schalter 26 sind beispielsweise als Relais, als sperrbare Tristate-Treiber oder als MOSFETS ausgebildet.

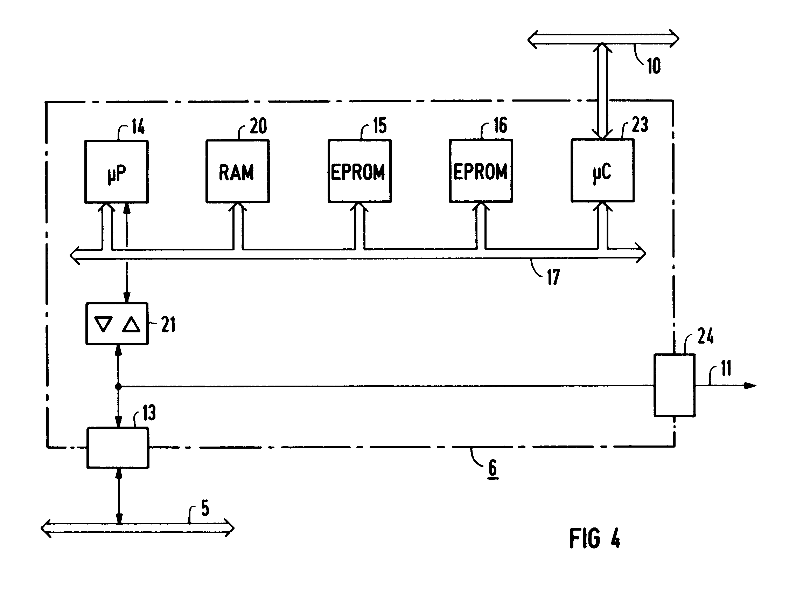

Gemäß FIG 3 ist die Verbindung zwischen der ProgrammierSchnittstelle 13 und der Kommunikations-Schnittstelle 24 trennbar. Die Verbindung kann aber auch, wie in FIG 4 dargestellt, fest sein. In diesem Fall kann selbstverständlich der zweite Satz von Treiberbausteinen 25 entfallen. In FIG 4 ist ferner dargestellt, daß die Treiberbausteine 21 direkt mit der Prozessoreinheit 14 verbunden sein können.

Wenn die Busse 5, 11 miteinander verbunden sind, ist eine direkte Kommunikation zwischen an den Bus 11 angeschlossenen Peripherieeinheiten 7 bis 9 mit an den Bus 5 angeschlossenen Einheiten, z. B. dem Programmiergerät 3, möglich.

Über den Bus 5 und die Programmierschnittstellen 12,13 werden die speicherprogrammierbaren Steuerungen 1,2,2' selbstverständlich programmiert. Darüber hinaus kommunizieren die speicherprogrammierbaren Steuerungen 1,2,2' über die Programmierschnittstellen 12,13 und den Bus 5 aber auch untereinander und mit der Bedien- und Beobachtungseinheit 4.

## Patentansprüche

1. Zentraleinheit (6) einer modularen speicherprogrammierbaren Steuerung (2), mit folgenden, über ein Bussystem (17) miteinander verbundenen Elementen:
- einer Prozessoreinheit (14)
-- zum Abarbeiten eines Anwenderprogrammes,
- einem Speicher (16)
-- zum Speichern zumindest des Anwenderprogrammes,
- einer Peripherieschnittstelle (23)
-- zum Zugriff auf mindestens eine Peripherieeinheit (7-9) über zumindest einen Peripheriebus (10) und
- einer Programmierschnittstelle (13)
-- zum Anschließen einer Programmiereinheit (3) an die Zentraleinheit (6) über einen Bus (5),
**dadurch gekennzeichnet,**
- daß die Programmierschnittstelle (13) als busfähige Schnittstelle ausgebildet ist,
- daß mittels einer Kommunikationsschnittstelle (24) die Zentraleinheit (6) mit der mindestens einen Peripherieeinheit (7-9) zusätzlich über einen Kommunikationsbus (11) verbindbar ist,
- daß die Programmierschnittstelle (13) mit der Kommunikationsschnittstelle (24) verbunden ist und
- daß sowohl die Programmierschnittstelle (13) als auch die Kommunikationsschnittstelle (24) als serielle Schnittstelle mit Differenzsignalübertragung ausgebildet ist,
- so daß der Bus (5) mit dem Kommunikationsbus (11) koppelbar ist.

2. Zentraleinheit nach Anspruch 1, **dadurch gekennzeichnet**, daß die Programmierschnittstelle (13) mit der Kommunikationsschnittstelle (24) trennbar verbunden ist.

3. Zentraleinheit nach Anspruch 1 oder 2, **dadurch gekennzeichnet,** daß die Prozessoreinheit (14) über eine intelligente Zwischeneinheit (22) mit der Programmierschnittstelle (13) verbunden ist.

4. Modulare speicherprogrammierbare Steuerung mit einer Zentraleinheit (6) nach einem der obigen Ansprüche.

5. Verfahren zur Kommunikation zwischen einer Peripherieeinheit (7-9) einer modularen speicherprogrammierbaren Steuerung (2) und einer Programmiereinheit (3),
- wobei die modulare speicherprogrammierbare Steuerung (2) zumindest aus einer Zentraleinheit (6) und der Peripherieeinheit (7-9) besteht und die Zentraleinheit (6) und die Peripherieeinheit (7-9) über einen Peripheriebus (10) miteinander kommunizieren,
- wobei die Zentraleinheit (6) eine busfähige Programmierschnittstelle (13) aufweist und die Programmiereinheit (3) über den Bus (5) an die busfähige Programmierschnittstelle (13) angeschlossen ist,
- wobei die Kommunikation zwischen der Peripherieeinheit (7-9) und der Programmiereinheit (3) über die busfähige Programmierschnittstelle (13) und einen weiteren, innerhalb der modularen speicherprogrammierbaren Steuerung (2) vorgesehenen Kommunikationsbus (11) über die Kommunikationsschnittstelle (24) erfolgt,
- wobei die Programmierschnittstelle (13) mit der Kommunikationsstelle (24) verbunden ist und
- wobei die Kommunikation zwischen der Peripherieeinheit (7-9) und der Programmiereinheit (3) durch Differenzsignalübertragung erfolgt.

6. Verfahren nach Anspruch 5, **dadurch gekennzeichnet,** daß die Programmierschnittstelle (13) mit der Kommunikationsschnittstelle (24) trennbar verbunden ist.

7. Verfahren nach Anspruch 5 oder 6, **dadurch gekennzeichnet,** daß die Prozessorein-heit (14) über eine intelligente Zwischeneinheit (22) mit der Programmierschnittstelle (13) verbunden ist.

## Claims

1. Central processing unit (6) of a modular programmable controller (2), having the following elements which are connected to each other via a bus system (17):
- a processor unit (14)
-- for executing an application program,
- a memory (16)
-- for storing at least the application program,
- a peripheral interface (23)
-- for access to at least one peripheral unit (7-9) via at least one peripheral bus (10), and
- a programming interface (13)
-- for connecting a programming unit (3) to the central processing unit (6) via a bus (5),
characterised
- in that the programming interface (13) is constructed as an interface with bus capability,
- in that by means of a communication interface (24), the central processing unit (6) can be connected to the at least one peripheral unit (7-9) additionally via a communication bus (11),
- in that the programming interface (13) is connected to the communication interface (24), and
- in that both the programming interface (13) and the communication interface (24) are constructed as a serial interface with differential signal transmission,
- so that the bus (5) can be coupled to the communication bus (11).

2. Central processing unit according to claim 1, characterised in that the programming interface (13) is detachably connected to the communication interface (24).

3. Central processing unit according to claim 1 or 2, characterised in that the processor unit (14) is connected to the programming interface (13) via an intelligent intermediate unit (22).

4. Modular programmable controller having a central processing unit (6) according to one of the above claims.

5. Method for communication between a peripheral unit (7-9) of a modular programmable controller (2) and a programming unit (3),
- with the modular programmable controller (2) comprising at least a central processing unit (6) and the peripheral unit (7-9), and the central processing unit (6) and the peripheral unit (7-9) communicating with each other via a peripheral bus (10),
- with the central processing unit (6) having a programming interface (13) with bus capability, and the programming unit (3) being connected via the bus (5) to the programming interface (13) with bus capability,
- with the communication between the peripheral unit (7-9) and the programming unit (3) via the programming interface (13) with bus capability and a further communication bus (11) provided inside the modular programmable controller (2) taking place via the communication interface (24),
- with the programming interface (13) being connected to the communication interface (24), and
- with the communication between the peripheral unit (7-9) and the programming unit (3) taking place by differential signal transmission.

6. Method according to claim 5, characterised in that the programming interface (13) is detachably connected to the communication interface (24).

7. Method according to claim 5 or 6, characterised in that the processor unit (14) is connected to the programming interface (13) via an intelligent intermediate unit (22).

## Revendications

1. Unité (6) centrale d'une commande (2) modulaire à programme enregistré, comportant les éléments suivants, qui sont reliés entre eux par l'intermédiaire d'un système (17) de bus :
- une unité (14) de processeur
-- pour traiter un programme utilisateur
- une mémoire (16)
-- pour enregistrer au moins le programme utilisateur.
- une interface (23) périphérique
-- pour accéder à au moins une unité (7 à 9) périphérique par l'intermédiaire d'au moins un bus (10) périphérique et,
- une interface (13) de programmation
-- pour le raccordement d'une unité (3) de programmation à l'unité (6) centrale par l'intermédiaire d'un bus (5),
caractérisé en ce que
l'interface (13) de programmation est réalisée en interface à capacité de bus,
- au moyen d'une interface (24) de communication, l'unité (6) centrale peut être reliée à ladite au moins une unité (7 à 9) périphérique de plus par l'intermédiaire d'un bus (11) de communication,
- l'interface (13) de programmation est reliée à l'interface (24) de communication et
aussi bien l'interface (13) de programmation que l'interface (24) de communication sont réalisés en interfaces sérielles à transmission de signaux différence,
- si bien que le bus (5) peut être couplé au bus (11) de communication.

2. Unité centrale suivant la revendication 1, caractérisée en ce que l'interface (13) de programmation est reliée à l'interface (24) de communication de manière à pouvoir en être détachée.

3. Unité centrale suivant la revendication 1 ou 2, caractérisée en ce que l'unité (14) de processeur est reliée à l'interface (13) de programmation par l'intermédiaire d'une unité (22) intermédiaire intelligente.

4. Commande modulaire à programme enregistré comportant une unité (6) centrale suivant l'une des revendications précédentes.

5. Procédé de communication entre une unité (7 à 9) périphérique d'une commande (2) modulaire à programme enregistré et une unité (3) de programmation,
- la commande (2) modulaire à programme enregistré étant constitué d'au moins une unité (6) centrale et de l'unité (7 à 9) périphérique, et l'unité (6) centrale et l'unité (7 à 9) périphérique communiquant entre elles par l'intermédiaire d'un bus (10) périphérique,
- l'unité (6) centrale comportant une interface (13) de programmation à capacité de bus, et l'unité (3) de programmation étant reliée à l'interface (13) de programmation à capacité de bus par l'intermédiaire du bus (5),
- la communication entre l'unité (7 à 9) périphérique et l'unité (3) de programmation s'effectuant par l'intermédiaire de l'interface (13) de programmation à capacité de bus et par l'intermédiaire d'un bus (11) supplémentaire de communication, prévu à l'intérieur de la commande (2) modulaire à programme enregistrée par l'intermédiaire de l'interface (24) de communication,
- l'interface (13) de programmation étant reliée à l'interface (24) de communication et,
- la communication entre l'unité (7à 9) périphérique et l'unité (3) de programmation s'effectuant par une transmission de signaux différence.

6. Procédé suivant la revendication 5, caractérisé en ce que l'interface (13) de programmation est reliée à l'interface (24) de communication de manière à pouvoir en être séparé.

7. Procédé suivant la revendication 5 ou 6, caractérisé en ce que l'unité (14) de processeur est reliée à l'interface (13) de programmation par l'intermédiaire d'une unité (22) intermédiaire intelligente.
